# FASCICULE DE BREVET EUROPEEN

(11) **EP 0 326 463 B1**
(45) Date de publication et mention de la délivrance du brevet: **05.05.1993**
(21) Numéro de dépôt: 89400146.0
(22) Date de dépôt: 18.01.1989
(51) Int. Cl.: B65G 13/11, B65G 13/07

(54) **Appareil de manutention destiné à déplacer, suivant une direction longitudinale sensiblement horizontale, des charges unitaires reposant sur des organes de roulement**
Förderer zum Fortbewegen in horizontaler Längsrichtung von auf Rollenlaufwerken liegenden Einzellasten
Conveyor for moving single-loads lying on roller gears in a longitudinal and horizontal direction

(30) Priorité: 22.01.1988 FR 8800706
(43) Date de publication de la demande: 02.08.1989
(73) Titulaire: INTERROLL S.à.r.l., F-21150 Venarey les Laumes (FR)
(72) Inventeur: Blondeau, Pierre, F-21800 Montbard (FR)
(74) Mandataire: Bruder, Michel

(56) Documents cités:
- CH-A- 452 435
- FR-A- 456 188
- FR-A- 1 469 998
- FR-A- 2 387 873
- US-A- 3 263 951

## Description

La présente invention concerne un appareil de manutention tel que décrit dans la première partie de la revendication 1.

On connaît déjà de tels appareils (voir le document FR-A-1 469 998), qui présentent l'inconvénient d'être de longueur et de largeur fixes. Si la distance de déplacement vient à changer du fait des contraintes imposées par l'exploitation ou si du fait de ces mêmes contraintes les charges à déplacer changent de dimensions, il faut se contenter de l'appareil dont on dispose ou bien changer totalement d'appareil, avec les conséquences gênantes afférentes.

Afin de pallier ces inconvénients, on propose, suivant l'invention, un appareil de ce type, caractérisé par les dispositions indiquées dans la deuxième partie de la première revendication.

Un tel appareil présente en premier lieu l'avantage de pouvoir être adapté aussi bien à la distance de transport imposée par les contraintes de l'exploitation, qu'aux dimensions en largeur des charges à déplacer à l'aide de cet appareil. L'appareil est modulaire, il peut être monté et démonté, allongé ou raccourci, rendu plus large ou plus étroit selon les nécessités.

L'appareil présente également l'avantage que la puissance nécessaire pour son entraînement est très faible, car seuls les galets ou les rouleaux se trouvant en dessous d'une charge demandent un couple de transport plus important, ce couple étant pratiquement proportionnel au poids de la charge. Un autre avantage de l'appareil est qu'il peut être nettoyé très facilement du fait que les arbres peuvent être soulevés très aisément et dégagés des alvéoles en U dans lesquelles leurs parties extrêmes sont engagées librement.

On décrira ci-après, à titre d'exemple non limitatif, une forme d'exécution de la présente invention, en référence au dessin annexé sur lequel :
La figure 1 est une vue en élévation, schématique, partiellement en coupe, le cache enlevé, de l'appareil de l'invention et
La figure 2 est une vue en plan, schématique, partielle du même appareil.
La figure 3 est une vue en coupe verticale et longitudinale partielle, à plus grande échelle, de la partie supérieure de l'appareil.
La figure 4 est une vue en perspective éclatée d'une variante d'exécution de l'appareil suivant l'invention.
La figure 5 est une vue en perspective éclatée d'une autre variante d'exécution de l'appareil suivant l'invention.

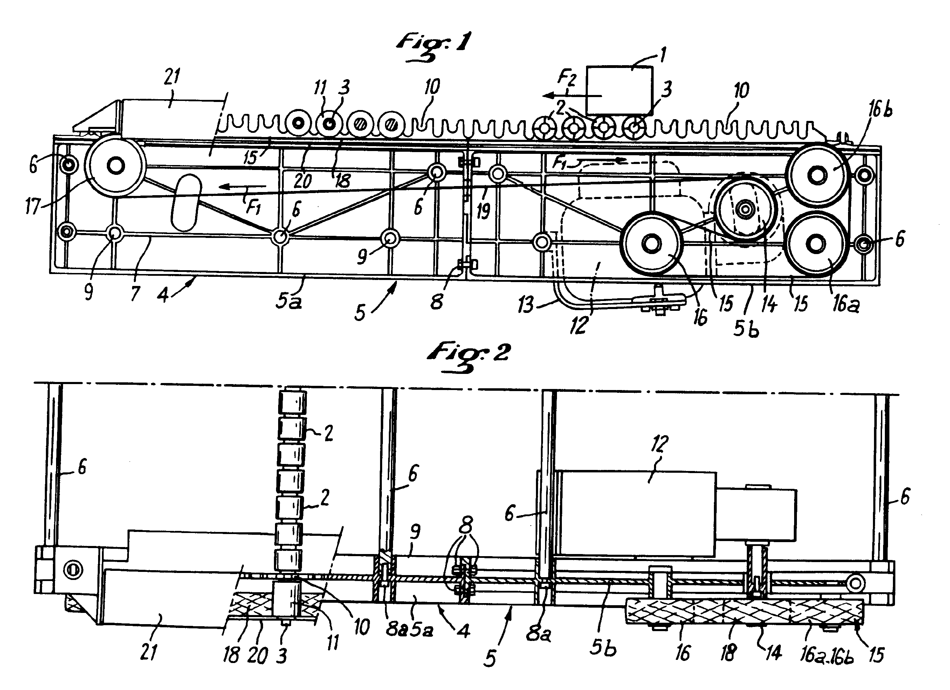

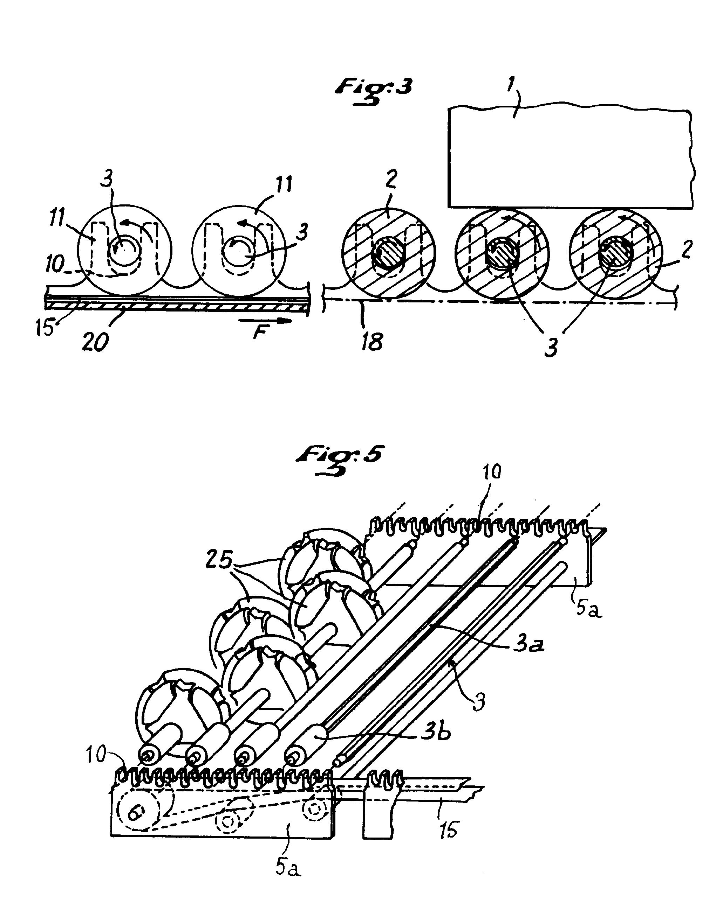

L'appareil représenté sur les figures 1 à 3 est un appareil de manutention destiné à déplacer, suivant une direction horizontale ou inclinée par rapport à l'horizontale d'un angle très faible vers le haut ou vers le bas, des charges unitaires 1 reposant sur des galets 2, montés libres sur des arbres transversaux 3. Ces galets 2 ont un diamètre interne très légèrement supérieur au diamètre externe des arbres 3, comme on peut le voir sur la figure 3, de manière à ne pas être normalement entraînés en rotation et à ne l'être, par friction, ainsi qu'il sera détaillé par la suite, que lorsqu'une charge 1 est en appui sur eux du fait du poids de cette charge 1, cette charge étant avancée à partir de l'une des extrémités de l'appareil ou extrémité arrière, vers la partie opposée de celui-ci ou extrémité avant.

L'appareil est constitué d'un châssis 4 comportant deux parois latérales 5 parallèles et verticales, réunies entre elles à distance fixe, constituant la largeur de l'appareil, à l'aide d'entretoises 6.

Les parois 5, avantageusement réalisée en matière plastique moulée, sont pourvues de nervures 7 de consolidation de l'appareil et elles sont constituées d'éléments indentiques, assemblés dans le sens de la longueur à l'aide de boulons 8. Dans la forme d'exécution non limitative représentée sur le dessin, chaque paroi latérale 5 est constituée uniquement de deux parois élémentaires avant 5a et arrière 5b mais la longueur de l'appareil pourrait être augmentée en ajoutant des parois élémentaires intermédiaires entre les deux parois avant 5a et arrière 6b. Les entretoises 6 sont constituées de barres, par exemple cylindriques, pourvues, à leurs extrémités de taraudages axiaux, dans lesquels viennent se visser des vis 8a. Les vis 8a des entretoises 6, avant de se visser dans les taraudages respectifs, passent à travers des trous 9 percés, en vue de l'assemblage de l'appareil, dans les parois élémentaires 5a,5b. La largeur de l'appareil peut être rendue plus grande ou plus réduite en utilisant des entretoises 6 plus ou moins longues.

Les parois élémentaires avant 5a et arrière 6b, ainsi que les parois intermédiaires éventuelles, portent sur leurs bords supérieurs, sur toute leur longueur, une succession d'alvéoles équidistantes 10 en forme de U ouvert vers le haut. Dans les alvéoles 10 sont engagées librement les parties extrêmes des arbres 3 sur lesquels sont enfilés, à rotation libre, les galets 2. Chaque arbre 3 porte, à l'une de ses parties extrêmes, un galet moteur 11, emmanché à force afin d'être solidaire en rotation de cet arbre (figure 2). Les arbres 3 sont de même longueur que les entretoises 6 et ils sont pourvus d'un nombre approprié de galets identiques 2, en nombre suffisant pour couvrir toute la longueur de l'arbre 3 entre les parois 5, selon la largeur de l'appareil. Cette disposition est particulièrement avantageuse car elle permet un nettoyage aisé de l'appareil : en effet il suffit de soulever chaque arbre 3, avec ses galets 2, pour le dégager de ses deux alvéoles 10, cette opération ne nécessitant l'emploi d'aucun outil.

Le dispositif de motorisation de l'appareil, logé entre les deux parois élémentaires arrière 5b, est constitué par un moteur 12, de préférence électrique, pourvu d'un réducteur, porté par un support 13 monté en bascule. L'ensemble motoréducteur 12 est monté entre les parois arrière 5b, à l'intérieur de l'appareil, pour être protégé, et il supporte à l'extrémité de son arbre de sortie 12a, à l'extérieur de la paroi élémentaire arrière 5b située à gauche sur la figure 2, en considérant le sens d'avancement des charges 1 de la droite vers la gauche, un galet d'entraînement 14, sur lequel passe une courroie sans fin plate 15, de faible largeur. Cette courroie d'entraînement sans fin 15 de l'appareil passe sur trois poulies de renvoi 16,16a,16b montées à rotation sur des axes portés par la paroi arrière gauche 5b traversée par l'arbre de sortie 12a du motoréducteur 12 et sur une poulie de renvoi 17 montée à rotation, sur la paroi avant gauche 5a de l'appareil. la courroie 15 comporte de la sorte deux brins, c'est-à-dire un brin supérieur 18 se déplaçant de l'avant vers l'arrière de l'appareil et un brin inférieur 19 se déplaçant de l'arrière vers l'avant de l'appareil, ainsi qu'indiqué sur la figure 1 du dessin par les flèches F1. Le brin supérieur 18 de la courroie 15 glisse sur une aile horizontale supérieure 20 faisant saillie vers l'extérieur à partir des parois 5a,5b et faisant office de glissière d'appui pour ce brin supérieur de la courroie. Du fait que les arbres 3 reposent dans les alvéoles 10, à proximité immédiate de leurs fonds, les galets moteurs 11 sont en appui sur le brin supérieur 18 de la courroie 15 (figure 1) qui glisse en appui sur l'aile 20, et ils sont entraînés en rotation, de même que les arbres 3, dans le sens inverse des aiguilles d'une montre, les galets 2 restant toutefois immobiles, comme il est représenté sur la figure 3. Lorsque la charge 1 passe au-dessus de galets 2 portés par un arbre 3, la force d'appui du galet moteur 11 de cet arbre sur le brin supérieur 18 de la courroie 15 est augmentée du poids de la charge et par ailleurs les galets 2, pressés davantage contre l'arbre 3 par le poids de la charge, sont alors entraînés, par friction, en rotation dans le sens inverse des aiguilles d'une montre (figure 3). La charge 1 est donc avancée, par les rangées de galets 2 successives, le long de l'appareil, depuis sa partie arrière vers sa partie avant dans le sens de la flèche F2. Le galet d'entraînement 14, les poulies de renvoi arrière 16,16a,16b et la poulie de renvoi avant 17 sont disposés à l'extérieur de la paroi arrière 5b de l'appareil et de ce fait il en est de même de la courroie 15 et de l'aile 20 de glissement du brin supérieur 18 de la courroie. Un cache 21 est donc prévu pour protéger ces organes extérieurs de l'appareil et également protéger contre tout accident possible les personnes qui approchent ces parties pendant le fonctionnement de l'appareil. Le cache 21 peut être seulement suspendu à des crochets afin de pouvoir être démonté sans nécessiter des outils.

Le montage du motoréducteur 12 sur un support en bascule fournit un effort d'auto-tension de la courroie 15.

Les entretoises 6 et les arbres 3 sont de préférence construits en acier inoxydable, tandis que les parois latérales 5a,5b du châssis 1, les galets 2,11,14 les poulies 16,16a,16b,17 et le cache 21 sont en une matière plastique injectée, à très hautes caractéristiques mécaniques.

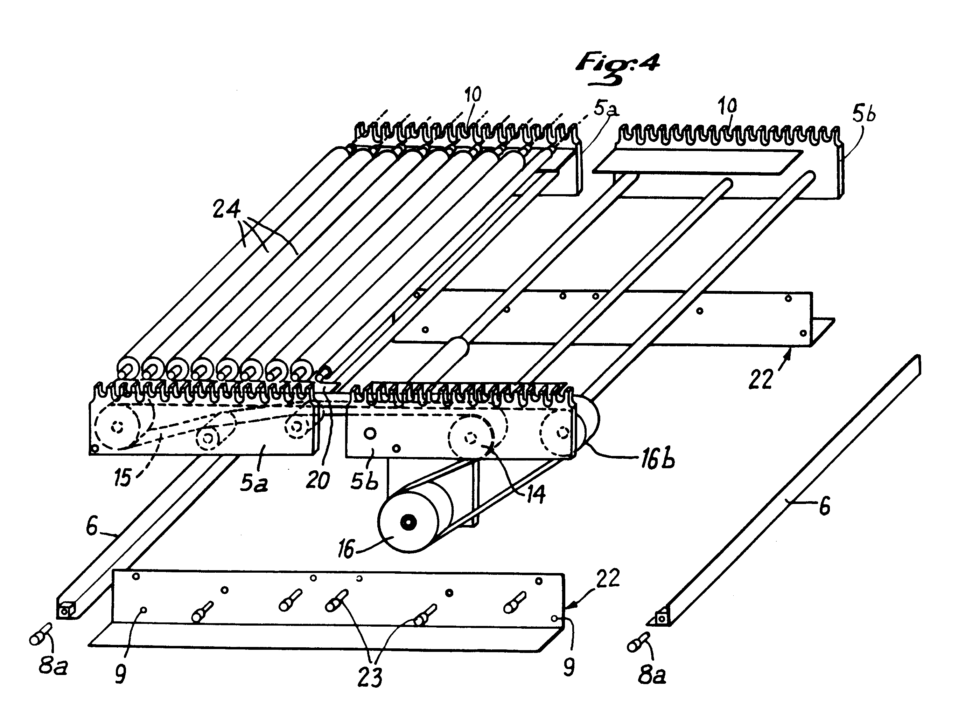

Dans la variante d'exécution représentée sur la figure 4 les deux parois élémentaires avant 5a et arrière 5b sont fixées, dans le prolongement l'une de l'autre, à l'aile verticale d'une cornière longitudinale inférieure 22 constituant une embase de l'appareil. La fixation est assurée au moyen de vis transversales 23. Les deux cornières inférieures 22 sont assemblées par des entretoises transversales 6, fixées à leurs extrémités aux cornières 22 au moyen des vis 8a. Dans cette forme d'exécution l'aile horizontale supérieure 20 sur laquelle glisse le brin supérieur 18 de la courroie 15, s'étend vers l'intérieur, à partir de chaque paroi verticale élémentaire avant 5a et arrière 5b. Chacune de ces parois 5a,5b est ainsi constituée par un bloc en matière plastique moulé d'une seule pièce comprenant la paroi verticale proprement dite, l'aile horizontale supérieure 20 s'étendant vers l'intérieur et, le long du bord supérieur de la paroi, la succession des alvéoles 10 recevant les extrémités des arbres 3. Par ailleurs dans l'appareil représenté sur la figure 4 les galets 2 de l'appareil de la figure 1 ont été remplacés par des rouleaux transversaux de petit diamètre, par exemple de 22mm, dont la longueur correspond à la largeur du tablier désirée pour l'appareil. Chaque rouleau est monté sur son axe 3 de la même façon que les galets 2 dans le case de la forme d'exécution des figures 1 et 2. Dans ce cas la partie extrême gauche de chaque rouleau 24 joue le rôle du galet moteur 11, en prenant appui, sous l'effet de son propre poids, sur le brin supérieur 18 de la courroie 15. Ainsi chaque rouleau 24 supportant une charge 1 est entraîné en rotation dans le sens inverse des aiguilles d'une montre sous l'effet de son propre poids et du poids de la charge 1.

Dans la variante d'exécution représentée sur la figure 5 chaque arbre 3 a, sur la plus grande partie de sa longueur 3a, une section droite polygonale, par example hexagonale, et cette partie 3a, à section droite hexagonale est en prise avec les alésages hexagonaux, de même dimension, de plusieurs galets omnidirectionnels 25 répartis le long de la partie 3a de l'axe 3. A son extrémité qui est située au-dessus du brin supérieur 18 de la courroie 15 l'axe 3 présente une partie cylindrique 3b servant de galet moteur pour l'entraînement de l'arbre 3 en rotation. L'appareil représenté sur la figure 5 offre l'avantage que les charges 1 qui sont déplacées longitudinalement, peuvent être également poussées transversalement sur les galets omnidirectionnels 25 si bien qu'un convoyeur réalisé avec de tels galets omnidirectionnels peut être utilisé comme élément de transfert.

## Revendications

1. Appareil de manutention de type modularisable, destiné à déplacer, suivant une direction longitudinale sensiblement horizontale, des charges unitaires (1) reposant sur des organes de roulement, engagés sur des arbres transversaux (3) entraînés par une courroie d'entraînement sans fin (15), entraînée par des moyens d'entraînement (12) et s'étendant sous une partie des organes de roulement, ledit appareil de manutention comportant un châssis constitué de deux parois latérales (5a,5b) parallèles et verticales, réunies entre elles à distance fixe, constituant la largeur de l'appareil, à l'aide d'entretoises transversales (6), les parois (5a,5b) portant, sur leur bord longitudinal supérieur, sur toute leur longueur, une succession d'alvéoles équidistantes (10), en forme de U ouvert vers le haut, dans lesquelles sont engagées librement les parties extrêmes des arbres (3) sur lesquels sont montés les organes de roulement, caractérisé en ce que les organes de roulement sont constitués par des galets (2) ou des rouleaux (24), et en ce que les parois (5) du châssis (4) sont constituées par les éléments de paroi (5a,5b) assemblés bout à bout, dans le sens de la longueur de l'appareil, de sorte que la longueur de l'appareil puisse être rendue plus grande ou plus réduite en ajoutant ou en enlevant des éléments de paroi, et en ce que les entretoises (6) sont constituées de barres pourvues, à leurs parties extrêmes, de taraudages axiaux dans lesquels viennent se visser des vis (8a), passant à travers des trous (9) percés dans les parois (5a), la largeur de l'appareil pouvant être rendue plus grande ou plus réduite en utilisant des entretoises (6) plus ou moins longues et en ce que la profondeur des alvéoles (10) est telle que les arbres (3) reposent dans les alvéoles (10) à proximité de leurs fonds de façon que ladite partie des rouleaux soit en appui sur le brin supérieur de la courroie (15), celle-ci glissant sur une aile horizontale supérieure (20) faisant saillie vers l'extérieur à partir des parois (5a, 5b).

2. Appareil suivant la revendication 1 caractérisé en ce que chaque arbre (3) comporte, à l'une de ses parties extrêmes, un galet moteur (11) emmanché à force sur l'arbre (3) et en contact avec le brin supérieur (18) de la courroie d'entraînement (15) de manière à entraîner en rotation l'arbre (3), et les galets (2) sont montés librement sur chaque arbre (3).

3. Appareil suivant l'une des revendications 1 ou 2 caractérisé en ce que les moyens d'entraînement sont constitués d'un motoréducteur (12) qui supporte, en bout d'arbre un galet d'entraînement (14), sur lequel passe la courroie (15) passant sur des poulies de renvoi (16,16a,16b,17) prévues aux parties extrêmes arrière et avant de l'appareil, cette courroie comportant un brin supérieur (18) se déplaçant de l'avant vers l'arrière de l'appareil et un brin inférieur (19) se déplaçant de l'arrière vers l'avant de l'appareil, le brin supérieur (18) de la courroie (15) glissant sur une aile horizontale supérieure (20) faisant saillie à partir de la paroi (5) vers l'extérieur ou l'intérieur de l'appareil et s'étendant sous les organes d'entraînement (11,13b) des arbres (3) ou sous les parties extrêmes de rouleaux (24) portés par les arbres (3) qui sont pressés sur le brin supérieur (18) de la courroie (15) sous l'effet de leur propre poids et éventuellement du poids de la charge.

4. Appareil suivant l'une des revendications précédentes caractérisé en ce que chaque arbre (3) présente, sur la plus grande partie de sa longueur (3a), une section droite polygonale qui est engagée dans un alésage de même forme prévu au centre de galets omnidirectionnels (25) et, à l'une de ses parties extrêmes, une partie cylindrique (3b) en contact avec le brin supérieur (18) de la courroie d'entraînement (15).

## Patentansprüche

1. Fördereinrichtung in Modulbauweise um in im wesentlichen horizontaler Längsrichtung Stückgüter (1) fortzubewegen, die auf Rollenanordnungen ruhen, welche auf Querwellen (3) angeordnet sind, die durch einen endlosen Treibriemen (15) angetrieben werden, welcher durch eine Antriebsvorrichtung (12) angetrienen wird und unter einem Teil der Rollenanordnungen verläuft, mit einem Gestell aus zwei vertikalen, parallelen Seitenwänden (5a, 5b), die durch Querstreben (6) mit festem Abstand entsprechend der Breite der Einrichtung miteinander verbunden sind und an ihrem oberen Längsrand über ihre ganze Länge eine Folge von äquidistanten Ausnehmungen (10) in Form eines nach oben offenen U aufweisen, in die die Enden der Wellen (3), auf denen die Rollenanordnungen angeordnet sind, frei eingreifen, **dadurch gekennzeichnet**, daß die Rollenanordnungen durch Rollen (2) oder Walzen (24) gebildet werden; daß die Wände (5) des Gestells (4) durch in Längsrichtung der Einrichtung Ende an Ende verbundene Wandelemente (5a, 5b) gebildet werden, so daß die Länge der Einrichtung durch Anfügen oder Entfernen von Wandelementen vergrößert oder verringert werden kann, daß die streben (6) durch Stangen gebildet werden, die an ihren Enden mit axialen Innengewinden versehen sind, in die Schrauben (8a) eingeschraubt sind, die durch Löcher (9) in den Wänden (5) gehen, wobei die Breite der Einrichtung durch Verwendung längerer oder kürzerer Streben (6) vergrößert oder verkleinert werden kann, und daß die Ausnehmungen (10) eine solche Tiefe haben, daß die Wellen (3) in den Ausnehmungen (10) in der Nähe von deren Grund zu liegen kommen, so daß der erwähnte Teil der Rollenanordnungen am oberen Trum des Treibriemens (5) anliegt, welches auf einer horizontalen oberen Fläche (20) gleitet, die von der Wand (5a, 5b) nach außen vorspringt.

2. Einrichtung nach Anspruch 1, **dadurch gekennzeichnet**, daß jede Welle (3) an einem ihrer Enden eine Antriebsrolle (10) aufweist, die im Preßsitz auf der Welle (3) angeordnet ist und in Berührung mit dem oberen Trum (18) des Antriebsriemens (15) steht, so daß die Welle (3) drehend angetrieben wird, und daß die Rollen (2) frei auf der jeweiligen Welle (3) angeordnet sind.

3. Einrichtung nach Anspruch 1 oder 2, **dadurch gekennzeichnet,** daß die Antriebsvorrichtung aus einer Motor-Untersetzungsgetriebe-Anordnung (12) besteht, die am Wellenende eine Antriebsrolle (14) trägt, über die der Riemen (15) läuft, welcher über am vorderen und hinteren Ende der Einrichtung vorgesehene Umlenkrollen (16, 16a, 16b, 17) geführt ist, wobei der Riemen ein oberes Trum (18), welches in der Einrichtung von vorne nach hinten läuft, und ein unteres Trum (19), das in der Einrichtung von hinten nach vorne läuft, aufweist, wobei ferner das obere Trum (18) des Riemens (15) auf einer horizontalen oberen Fläche (20) gleitet, die von der Wand (5) zur Außenseite oder Innenseite der Einrichtung vorspringt und unter den Antriebsorganen (11, 13b) der Wellen (3) oder unter den Enden von auf den Wellen (3) angeordneten Rollen (24) verläuft, die unter der Wirkung ihres eigenen Gewichtes oder gegebenenfalls des Gewichtes des Gutes auf das obere Trum (18) des Riemens (15) gedrückt werden.

4. Einrichtung nach einem der vorhergehenden Ansprüche, **dadurch gekennzeichnet**, daß jede Welle (3) über den größeren Teil ihrer Länge (3a) einen polygonalen Querschnitt, der in eine in der Mitte von Allrichtungsrollen (25) vorgesehene Ausnehmung gleicher Form eingreift, und an einem ihrer Enden einen zylindrischen Teil (3b), der mit dem oberen Trum (18) des Antriebsriemenes (15) in Berührung steht, aufweist.

## Claims

1. Handling apparatus of modularizable type, intended to move, in a substantially horizontal, longitudinal direction, single loads (1) resting on rolling members, engaged on transverse shafts (3) driven by an endless drive belt (15), driven by drive means (12) and extending beneath a part of the rolling members, said handling apparatus comprising a chassis constituted by two parallel and vertical, lateral walls (5a, 5b) joined together at a fixed distance, constituting the width of the apparatus, with the aid of transverse crosspieces (6), the walls (5a, 5b) bearing, on their upper longitudinal edge, over the whole of their length, a succession of equidistant cavities (10), in the form of an upwardly open U, in which are freely engaged the end parts of the shafts (3) on which are mounted the rolling members, characterized in that the rolling members are constituted by rollers (2) or rollers (24), and in that the walls (5) of the chassis (4) are constituted by the wall elements (5a, 5b) assembled end to end, lengthwise of the apparatus, with the result that the length of the apparatus may be rendered greater or shorter by adding or removing wall elements, and in that the crosspieces (6) are constituted by bars provided, in their end parts, with axial tappings in which are screwed screws (8a) passing through holes (9) made in the walls (5), the width of the apparatus being able to be rendered greater or shorter by using more or less long crosspieces (6) and in that the depth of the cavities (10) is such that the shafts (3) rest in the cavities (10) near their bottoms so that said part of the rollers is in abutment on the upper side of the belt (15), the latter sliding on an upper horizontal flange (20) projecting outwards from the walls (5a, 5b).

2. Apparatus according to Claim 1, characterized in that each shaft (3) comprises, in one of its end parts, a drive roller (11) force-fitted on the shaft (3) and in contact with the upper side (18) of the drive belt (15) so as to drive shaft (3) in rotation, and the rollers (2) are mounted freely on each shaft (3).

3. Apparatus according to one of Claims 1 or 2, characterized in that the drive means are constituted by a gear motor (12) which supports, at the shaft end, a drive roller (14), over which passes the belt (15) passing over guide pulleys (16, 16a, 16b, 17) provided at the rear and front end parts of the apparatus, this belt comprising an upper side (18) moving from the front of the apparatus towards the rear and a lower side (19) moving from the rear of the apparatus towards the front, the upper side (18) of the belt (15) sliding over an upper horizontal flange (20) projecting from the wall (5) towards the outside or inside of the apparatus and extending beneath the drive members (11, 13b) of the shafts (3) or beneath the end parts of rollers (24) borne by the shafts (3) which are pressed on the upper side (18) of the belt (15) under the effect of their own weight and possibly of the weight of the load.

4. Apparatus according to one of the preceding Claims, characterized in that each shaft (3) presents, over the greater part of its length (3a), a polygonal cross section which is engaged in a bore of the same shape provided at the centre of omnidirectional rollers (25) and, in one of its end parts, a cylindrical part (3b) in contact with the upper side (18) of the drive belt (15).
